Europäisches Patentamt

European Patent Office

Office européen des brevets

(11) Numéro de publication: **0 322 281**

**A1**

# (12) DEMANDE DE BREVET EUROPEEN

(21) Numéro de dépôt: **88403180.8**

(22) Date de dépôt: **14.12.88**

(51) Int. Cl.⁴: **G 01 F 23/28**
G 01 D 5/247

(30) Priorité: **16.12.87 FR 8717562**

(43) Date de publication de la demande:
**28.06.89 Bulletin 89/26**

(84) Etats contractants désignés: **BE GB LU NL**

(71) Demandeur: **WHESSOE S.A.**
**Rue de Bitche**
**F-62100 Calais (FR)**

(72) Inventeur: **Habart, Philippe**
**485 Route de Grisendale Maninghan - Henne**
**F-62250 Marquise (FR)**

(74) Mandataire: **Martin, Jean-Jacques et al**
**Cabinet REGIMBEAU 26, Avenue Kléber**
**F-75116 Paris (FR)**

(54) **Dispositif de mesure des paramètres de stockage, tels que le niveau et la température, de liquides ou fluides de densités différentes dans un réservoir.**

(57) L'invention concerne un dispositif de mesure des paramètres de stockage de liquides ou fluides non miscibles dans un réservoir, tels que niveau et température.

Le dispositif comprend un générateur d'impulsions (1) permettant d'engendrer sur une ligne à retard (3) des impulsions réfléchies représentatives de la hauteur des différents liquides constituant des transistions de propagation dans les différents milieux I, II, III, IV et ainsi de suite. Des moyens logiques (Li) sont rendus passant entre une impulsion de mesure (Im) et une impulsion réfléchie (Ii) correspondante engendrées par une transition d'ordre i. L'intégration par des moyens intégrateurs (Ji) du signal délivré par les moyens logiques (Li) permet d'engendrer une tension proportionnelle à la durée entre l'impulsion de mesure (Im) et l'impulsion réfléchie (Ii) considérée. Des moyens multiplexeurs permettent de délivrer séquentiellement les valeurs mesurées correspondant aux différents liquides sous vide d'ordre i.

Application à la surveillance et à la gestion des réservoirs d'hydrocarbure.

FIG.1

EP 0 322 281 A1

## Description

## DISPOSITIF DE MESURE DES PARAMETRES DE STOCKAGE, TELS QUE LE NIVEAU ET LA TEMPERATURE, DE LIQUIDES OU FLUIDES DE DENSITES DIFFERENTES DANS UN RESERVOIR

La présente invention est relative à un dispositif de mesure des paramètres de stockage, tels que le niveau et la température, de liquides ou fluides dans un réservoir.

Actuellement, les liquides ou fluides stockés dans des réservoirs, liquides tels que les hydrocarbures, font l'objet notamment dans des installations de raffineries d'hydrocarbures de surveillance constante pour une gestion économique fiable et de grande sécurité de ces volumes importants de carburants.

Afin de mesurer le niveau de ces fluides, on a proposé jusqu'à ce jour des systèmes dans lesquels une ligne de transmission électrique, sensiblement verticale, est partiellement immergée dans le fluide et reliée à une source d'impulsions électriques de mesure émises vers la ligne. Les impulsions de mesure sont partiellement réfléchies au plan de discontinuité diélectrique constitué par la surface libre du liquide tel que l'hydrocarbure dans le réservoir et par l'atmosphère correspondant à la partie vide du réservoir.

Pour une description de ce type d'appareil, on pourra se reporter à la demande de brevet français n° 73 39188 déposée le 5 novembre 1973 au nom de la Demanderesse.

Le dispositif décrit permet d'obtenir une bonne mesure du niveau de séparation du liquide constitué par l'hydrocarbure et la partie supérieure vide du réservoir. Cependant, dans la plupart des cas, le fluide constitué par l'hydrocarbure flotte sur un fond d'eau et la mesure du niveau de liquide correspondant à la première transition atmosphère hydrocarbure ne correspond plus ni au niveau ni au volume vrai d'hydrocarbure contenu dans le réservoir. Il n'est donc plus possible de mesurer en permanence le niveau vrai d'un des fluides compte tenu de la présence d'un ou plusieurs autres.

En outre, afin d'assurer une surveillance complète de ces réservoirs, il est avantageux de pouvoir mesurer à la fois la température de l'atmosphère supérieure constituant vide du réservoir et du fluide constituant, tel que l'hydrocarbure, la première transition avec l'atmosphère du réservoir, et ce indépendamment du niveau réel de cette transition.

Les dispositifs actuels de mesure de température doivent donc soit comporter des sondes de mesure montées sur flotteurs, soit prévoir une pluralité de sondes réparties par exemple sur la surface interne du réservoir.

La présente invention a pour but de remédier à l'ensemble des inconvénients précités par la mise en oeuvre d'un dispositif unique de mesure des paramètres de stockage, tels que le niveau et la température de liquides ou de fluides de densité différente dans un réservoir.

Un autre objet de la présente invention est la mise en oeuvre d'un dispositif de mesure des paramètres de stockage de liquides ou fluides dans un réservoir, grâce auquel la hauteur effective de chacun des fluides ou liquides de densité différente est obtenue en présence des autres fluides ou liquides.

Un autre objet de la présente invention est également un dispositif de mesure de la température moyenne d'un fluide ou liquide déterminé contenu dans un réservoir, compte tenu de la valeur de la température de la phase vapeur de ce liquide ou fluide constituant l'atmosphère supérieure ou vide du réservoir.

Le dispositif de mesure des paramètres de stockage, tels que le niveau et la température de liquides ou fluides de densité différente dans un réservoir comprend un générateur d'impulsions à fréquence ajustable délivrant un premier signal d'horloge de fréquence déterminée f1 et un circuit de mise en forme d'impulsions délivrant des impulsions calibrées de mesure à une ligne à retard constituée par un enroulement en hélice disposé sensiblement verticalement dans le réservoir, l'extrémité de la ligne à retard au voisinage du fond du réservoir étant connectée à une résistance.

Il est remarquable en ce qu'il comporte des moyens comparateurs dont une borne d'entrée de comparaison est connectée à la borne d'entrée de la ligne à retard et dont la borne de sortie permet de délivrer un signal sur présence à ladite borne de comparaison d'une impulsion, une pluralité de moyens logiques connectés en parallèle à la sortie des moyens de comparaison, chaque moyen logique étant rendu passant par l'apparition d'une impulsion calibrée de mesure à la borne d'entrée de la ligne à retard et d'autre part bloqué par l'impulsion en réflexion correspondante provoquée au niveau de la ligne par la transition d'ordre i entre un milieu liquide ou fluide d'ordre i et un milieu liquide ou fluide d'ordre i + l, des moyens intégrateurs, un moyen intégrateur d'ordre i étant connecté en sortie du moyen logique correspondant et permettant d'engendrer une tension proportionnelle au temps d'ouverture du moyen logique Li correspondant, des moyens d'inhibition conditionnelle à une entrée, recevant les impulsions délivrées par les moyens comparateurs et à n sorties, une sortie d'ordre i et d'ordre inférieur desdits moyens d'inhibition conditionnelle délivrant un signal de commande de blocage audit moyen logique correspondant sur apparition en sortie des moyens de comparaison de l'impulsion réfléchie correspondante.

Le dispositif selon l'invention trouve application à la surveillance et à la gestion de réservoirs de fluide de toute nature et en particulier de réservoirs d'hydrocarbures dans des raffineries industrielles ou les stations services.

Le dispositif selon l'invention sera mieux compris à la lecture de la description et à l'observation des dessins ci-après dans lesquels :

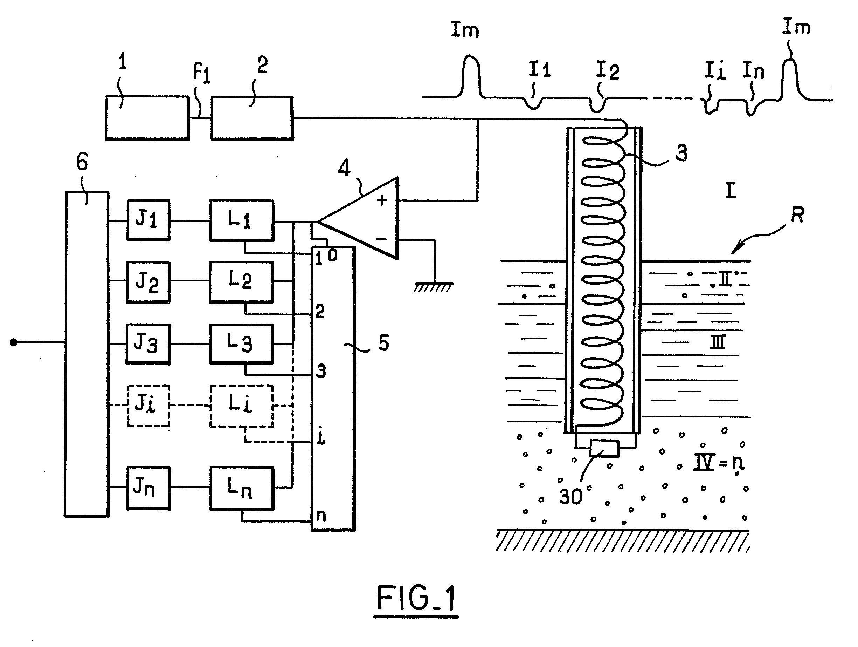

. la figure 1 représente un schéma synoptique d'un dispositif objet de l'invention, dans une configuration correspondant à un nombre important de liquides ou fluides de densité différente,

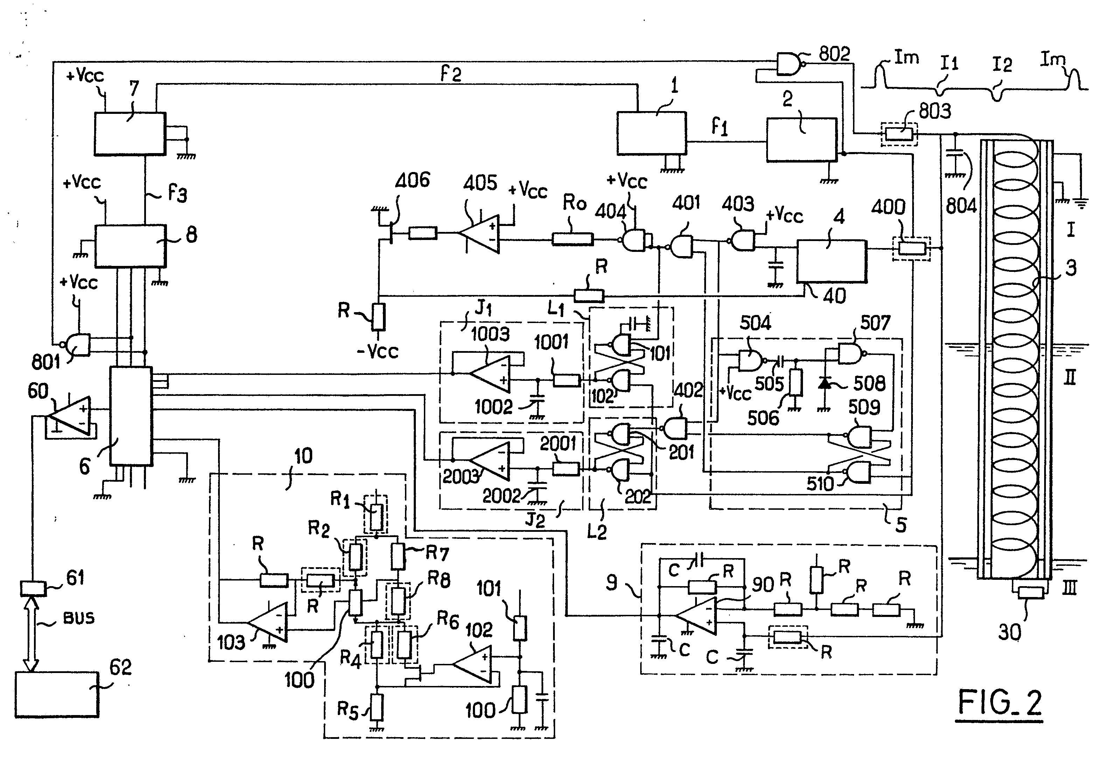

. la figure 2 représente un mode de réalisation particulier non limitatif du dispositif objet de l'invention, dans le cas d'un réservoir tel qu'un réservoir d'hydrocarbures pour lequel peuvent être le plus souvent rencontrés un premier fluide I, en partie supérieure du réservoir, correspondant à la phase vapeur de l'hydrocarbure considéré, - un deuxième fluide II, constitué par la phase liquide de l'hydrocarbure, - un troisième fluide III, constitué par de l'eau en fond de réservoir sur lequel le fluide II, en raison de leur différence de densité, flotte.

Le dispositif de mesure des paramètres de stockage tels que le niveau et la température de liquides ou fluides de densité différente dans un réservoir conforme à l'objet de la présente invention sera tout d'abord décrit en liaison avec la figure 1.

De manière classique, le dispositif selon l'invention comporte, ainsi que représenté sur la figure 1 précitée, un générateur 1 d'impulsions à fréquence ajustable délivrant un premier signal d'horloge de fréquence notée f1. En outre, un circuit 2 de mise en forme d'impulsions est connecté en sortie du générateur 1 d'impulsions et délivre des impulsions calibrées de mesure, notées Im, à une ligne à retard 3. La ligne à retard 3 est constituée par un enroulement en hélice disposé sensiblement verticalement dans le réservoir R.

Ainsi qu'on l'a représenté en figure 1, l'extrémité de la ligne à retard 3 disposée au voisinage du fond du réservoir est connectée à une résistance 30 qui joue le rôle de résistance de dissipation des impulsions incidentes de mesure Im après atténuation de celle-ci au niveau des différentes transitions entre les milieux tels que les milieux I, II, III et IV, cette représentation étant de manière non limitative, limitée à quatre milieux afin de ne pas surcharger inutilement le dessin. On comprendra bien entendu que l'impulsion de mesure Im présente sur la borne d'entrée de la ligne à retard 3 se propage sur celle-ci et subit au niveau de chaque transition, transition I-II, transition II-III et transition III-IV, une réflexion d'une partie de l'énergie de l'impulsion de mesure Im et une propagation de cette impulsion réfléchie en sens inverse sur la ligne à retard 3, c'est-à-dire vers la borne d'entrée de celle-ci. Bien entendu, la résistance 30 jouant le rôle de résistance de dissipation permet en extrémité de ligne à retard 3 d'assurer une absorption totale du résidu d'impulsions incidentes de mesure Im, l'extrémité de la ligne à retard 3 et la résistance de dissipation 30 étant bien entendu placées à proximité du fond du réservoir.

Pour une description plus détaillée du fonctionnement physique de ce type de ligne à retard dans une application consistant à mesurer le niveau d'un liquide dans un réservoir, on pourra se reporter à la demande de brevet français déjà citée. La différence de constante diélectrique de chacun des milieux I, II et III a pour effet de modifier les conditions de propagation des impulsions de mesure Im et d'engendrer à raison de la discontinuité de milieu diélectrique une impulsion réfléchie notée I1, I2, Ii au niveau de chaque transition, ces impulsions réflé-chies se propageant en sens inverse vers la borne d'entrée de la ligne. Bien entendu, ces impulsions réfléchies I1, I2, Ii et In apparaissent successivement après l'impulsion de mesure Im qui les a engendrées à la borne d'entrée de la ligne.

Selon un aspect particulièrement avantageux du dispositif objet de l'invention, celui-ci comporte des moyens comparateurs 4 dont une borne d'entrée de comparaison est connectée à la borne d'entrée de la ligne à retard 3 et dont la borne de sortie permet de délivrer un signal sur présence à la borne de comparaison précitée d'une impulsion. Sur la figure 1, on à représenté la borne positive d'un amplificateur différentiel reliée à la borne d'entrée de la ligne à retard 3, la borne négative de l'amplificateur différentiel étant reliée à la tension de référence, la borne de sortie de l'amplificateur différentiel 4 constituant moyen comparateur délivrant alors une impulsion positive pour chaque impulsion de mesure Im, et une impulsion négative pour chaque impulsion réfléchie I1, I2, Ii, en sortie du comparateur 4.

Ainsi qu'on pourra également le constater sur la figure 1, le dispositif objet de l'invention comporte une pluralité de moyens logiques notés L1, L2, Li, Ln, connectés en parallèle à la sortie des moyens de comparaison 4. Chaque moyen logique Li est d'une part rendu passant par l'apparition d'une impulsion calibrée de mesure Im à la borne d'entrée de la ligne à retard 3, par l'intermédiaire des moyens comparateurs 4. Ce même moyen logique Li est d'autre part bloqué par l'impulsion en réflexion correspondante Ii provoqué au niveau de la ligne de transmission à retard 3, par la transition d'ordre i entre un milieu d'ordre i et un milieu d'ordre i + 1, par l'intermédiaire des moyens comparateurs 4.

Des moyens intégrateurs notés J1, J2, Ji, Jn, sont en outre prévus, un moyen intégrateur d'ordre i, noté Ji, étant connecté en sortie du moyen logique correspondant Li et permet d'engendrer une tension proportionnelle au temps d'ouverture du moyen logique Li correspondant.

Ainsi qu'on le remarquera sur la figure 1, des moyens 5 d'inhibition conditionnelle sont également prévus, ces moyens comportant une entrée recevant les impulsions délivrées par les moyens comparateurs 4 et n sorties. Une sortie d'ordre et une sortie d'ordre inférieur des moyens d'inhibition conditionnelle 5 délivrent un signal de commande de blocage au moyen logique correspondant Li sur apparition en sortie des moyens de comparaison 4 de l'impulsion réfléchie Ii correspondante. Sur la figure 1, la borne d'entrée des moyens 5 d'inhibition conditionnelle est notée 0 et les sorties correspondantes sont notées 1, 2, 3, i, n.

En outre, des moyens multiplexeurs 6 sont prévus, dont les bornes d'entrée de multiplexage sont connectées en sortie des moyens intégrateurs Ji respectivement. La sortie des moyens multiplexeurs 6 délivre alors en série, la valeur du signal de sortie délivré par chaque moyen intégrateur Ji séquentiellement, ainsi qu'il sera décrit ultérieurement dans la description.

Le fonctionnement du dispositif tel que représenté en figure 1 est le suivant :
l'apparition d'une impulsion de mesure calibrée Im en sortie des moyens comparateurs 4 a pour effet, d'une part, de provoquer la remise à zéro des moyens logiques Li et leur mise à l'état passant. D'autre part, l'impulsion calibrée de mesure Im a pour effet de provoquer la remise à zéro des moyens d'inhibition conditionnelle 5 par l'intermédiaire de leur borne d'entrée 0, toutes les sorties 1, 2, 3, i, n des moyens 5 d'inhibition conditionnelle 5, par l'intermédiaire de leur borne d'entrée 0, étant alors à un niveau logique 0 correspondant par exemple à la commande de conduction de chacun des moyens logique Li considéré. L'apparition de la première impulsion réfléchie I1 en sortie des moyens comparateurs 4 a pour effet de provoquer le passage de la sortie 1 des moyens 5 d'inhibition conditionnelle au niveau logique 1, lequel commande le blocage des des moyens logiques L1 précités. Les sorties 2, 3, i, n des moyens d'inhibition conditionnelle 5 restant par contre au niveau logique 0 et les moyens logiques L2 à Li, Ln, restant à l'état passant. L'apparition de l'impulsion réfléchie I2 en sortie des moyens de comparaison 4 a pour effet de provoquer le maintien de la sortie 1 des moyens d'inhibition conditionnelle au niveau logique 1, le blocage du moyen logique L1 correspondant étant maintenu et le passage de la sortie 2 des moyens 5 d'inhibition conditionnelle à l'état logique 1, ce qui a pour effet de provoquer le blocage du moyen logique L2 correspondant, les sorties d'ordre supérieur 3i,n étant maintenues à l'état logique 0 et les moyens logiques correspondants L3, Li, Ln, étant maintenus à l'état passant. On comprendra bien entendu que l'apparition d'une impulsion réfléchie d'ordre supérieur tel que l'ordre 3 par exemple, a pour effet de provoquer successivement le blocage du moyen logique L3, les moyens logiques L1 et L2 étant maintenus bloqués et les moyens logiques d'ordre supérieur étant maintenus à l'état passant et ainsi de suite. De manière avantageuse non limitative, les moyens 5 d'inhibition conditionnnelle peuvent être constitués par un circuit du type circuit à décalage ou même par un circuit du type circuit de comptage.

Bien entendu, la période ou fréquence de récurrence des impulsions de mesure Im, peut être ajusté par l'intermédiaire de la fréquence de répétition des impulsions d'horloge f1, en fonction des paramètres physiques du réservoir R et du nombre de milieux susceptibles d'être contenus dans ce réservoir.

En outre, on comprendra que les différentes impulsions réfléchies I1, I2, Ii, In présentent des amplitudes qui peuvent être différentes en raison du fait des différentes valeurs de constante diélectrique de chacun des milieux fluides ou liquides constituant les transitions dans le réservoir et au niveau des conditions de propagation des impulsions sur la ligne à retard 3.

On notera enfin que chaque moyen logique Li peut être constitué par un circuit du genre bascule, dont l'état passant correspond au niveau logique haut, niveau logique 1 de valeur de tension élevée et dont l'état bloqué correspond au niveau logique bas, niveau logique 0 ou niveau bas de tension. Dans ces conditions, le circuit intégrateur Ji intègre le signal correspondant entre le niveau logique haut et le niveau logique bas, pendant la durée correspondant à l'intervalle de temps compris entre l'impulsion calibrée de mesure Im et l'impulsion réfléchie Ii d'ordre i correspondant. Les moyens intégrateurs Ji délivrent alors une tension proportionnelle à cette durée.

Un mode de réalisation plus spécifique du dispositif objet de l'invention, sera maintenant décrit en liaison avec la figure 2, dans le cas ou le réservoir R comporte deux transitions correspondant à trois milieux, notés respectivement I, II et III, de densité différente dans ce réservoir.

Ainsi qu'on l'a représenté en figure 2 précitée, la pluralité de moyens logiques comprend un premier circuit logique, constituant premier moyen logique L1, et comprenant deux portes NON-ET 101, 102 à deux entrées. La sortie de la première porte NON-ET 101 est connectée à une première entrée de la deuxième porte NON-ET 102 et la sortie de la deuxième porte NON-ET 102, constituant sortie du moyen logique L1 correspondant, est connectée à la deuxième entrée de la première porte NON-ET 101.

Un deuxième circuit logique constituant deuxième moyen logique L2 est également prévu et comporte deux portes NON-ET 201, 202, à deux entrées. La sortie de la première porte NON-ET 201 est connectée à une première entrée de la deuxième porte NON-ET 202 et la sortie de la deuxième porte NON-ET 202, constituant sortie du moyen logique L2 correspondant, est connectée à la deuxième entrée de la première porte NON-ET 201. La première entrée de la première porte NON-ET 101, respectivement 201 du premier L1 et du deuxième L2 circuit logique est connectée à la sortie des moyens comparateurs 4 par l'intermédiaire d'une porte NON-ET intermédiaire notée respectivement 401, 402, dont la première entrée est connectée en cascade à une porte NON-ET commune notée 403. La première entrée de la porte NON-ET commune 403 est reliée à la tension d'alimentation +Vcc du dispositif et la deuxième entrée de cette même porte NON-ET commune 403 est connectée en sortie des moyens de comparaison 4.

Ainsi qu'on l'a également représenté en figure 2, le circuit 5 d'inhibition conditionnelle est un circuit à deux sorties, une sortie du circuit d'inhibition conditionnelle étant connectée à une deuxième entrée de la porte NON-ET intermédiaire 402 correspondante respectivement.

Ainsi qu'on l'a représenté en figure 2, le circuit d'inhibition conditionnelle 5 comprend une première porte NON-ET 504, à deux entrées, dont une première entrée est connectée en sortie de la porte NON-ET commune 403 et dont la deuxième entrée est connectée à la tension d'alimentation +Vcc. Un circuit de liaison à capacité 505, résistance 506 comporte en cascade, une porte NON-ET 507, dont les entrées connectées en parallèles sont reliées à la tension de référence par l'intermédiaire d'une diode 508, connectée en inverse.

Un circuit logique comprenant deux portes NON-ET 509, 510 à deux entrées est prévu, la sortie de la première porte NON-ET 509 étant connectées à une première entrée de la deuxième porte NON-ET 510, et la sortie de la deuxième porte NON-ET 510 étant connectée à la deuxième entrée de la première porte NON-ET 509. La sortie des portes NON-ET 509 et 510 constitue la sortie des moyens logiques d'inhibition conditionnelle 5 précédemment décrite. La première entrée de la première porte logique NON-ET 509 est connectée en sortie de la porte NON-ET 507 du circuit de liaison et la deuxième entrée de la deuxième porte NON-ET 510 est reliée en sortie du circuit 2 de mise en forme des impulsions de mesure.

Le fonctionnement du circuit d'inhibition conditionnelle 5 représenté en figure 2 est tout à fait analogue du fonctionnement de ce même circuit représenté en figure 1, les portes NON-ET 509, 510 réalisant en quelque sorte le comptage des impulsions réfléchies I1 et I2 sur une base 2. Les sorties du circuit d'inhibition conditionnelle 5 représentées en figure 2, permettent alors d'assurer sur comptage de la première impulsion I1, le blocage du moyen logique L1, par l'intermédiaire de la première porte NON-ET intermédiaire 401, puis le blocage sur détection et comptage de la deuxième impulsion réfléchie I2, du deuxième moyen logique L2, par l'intermédiaire de la porte NON-ET intermédiaire 402, le moyen logique L1 étant maintenu bloqué par l'intermédiaire de la porte NON-ET intermédiaire 401 précitée. Les moyens logiques L1 et L2 jouent le rôle de bascule à deux états, ainsi que décrit précédemment en liaison avec la figure 1.

Selon un aspect avantageux du dispositif objet de l'invention, les moyens de comparaison 4 sont constitués par un comparateur à seuil, comprenant une entrée 40 de réglage du seuil de comparaison. Le comparateur à seuil 4 est un comparateur normalement disponible dans le commerce et ne fera pas l'objet d'une description détaillée.

Selon une caractéristique avantageuse, le dispositif objet de l'invention, tel que représenté en figure 2 comporte en outre, un circuit d'asservissement noté 404, 405, 406, du seuil de déclenchement des moyens comparateurs 4, afin d'obtenir en sortie de ces moyens comparateurs, des impulsions de largeur sensiblement constante. Dans ce but, ainsi qu'on le remarquera en figure 2, le circuit d'asservissement est constitué par une porte NON-ET 404, laquelle délivre à un amplificateur 405, un signal lors de la présence d'une impulsion sur la première porte NON-ET intermédiaire 401. Un transistor 406, connecté en sortie de l'amplificateur 405, permet de réinjecter au niveau de l'entrée 40 du comparateur 4, un niveau de seuil ajustable en fonction de la valeur du signal délivré par l'amplificateur 405. Sur l'ensemble du schéma de la figure 2, on notera que les éléments notés R, correspondent à des résistances permettant d'assurer la polarisation convenable des différents éléments, lesquels sont des éléments normalement disponibles dans le commerce. Ces résistances R ont des valeurs particulières, connues de l'homme du métier et permettent d'assurer en outre, l'adaptation des diverses impédances des éléments, pour assurer une transmission convenable des signaux.

Ainsi qu'on l'a représenté en outre en figure 2, le dispositif objet de l'invention comporte en outre un circuit 7 diviseur de fréquence d'impulsions, recevant un deuxième signal d'horloge de fréquence f2. Le deuxième signal d'horloge peut être engendré bien évidemment, à partir du générateur d'impulsions 1. Le circuit diviseur 7 délivre un troisième signal d'horloge de fréquence f3, constituant un signal de cadencement du multiplexeur 6, par l'intermédiaire d'un compteur 8

Une première porte NON-ET 801 est interconnectée entre le compteur 8 et le multiplexeur 6 et est alimentée sous la tension d'alimentaiton de référence +Vcc. La sortie de la porte NON-ET 801 délivre périodiquement à la fréquence f3 la tension d'alimentation +Vcc.

Une deuxième porte NON-ET 802 est prévue, celle-ci comportant une première entrée connectée à la sortie de la première porte NON-ET 801 et une deuxième entrée connectée en sortie du circuit 2 de mise en forme délivrant les impulsions calibrées de mesure Im. La deuxième porte NON-ET 802 permet de substituer périodiquement aux impulsions de mesure Im la tension d'alimentation +Vcc et délivre soit les impulsions de mesure Im, soit la tension d'alimentation +Vcc à la ligne à retard 3, par l'intermédiaire d'une résistance 803, formant pont diviseur avec la ligne et d'une capacité de découplage 804.

Conformément à un aspect particulièrement avantageux du dispositif objet de l'invention représenté en figure 2, celui-ci peut comprendre un circuit 9 de mesure de la température moyenne dans le réservoir R. Ce circuit 9 peut comporter ainsi que représenté en figure 2, un amplificateur 90, dont la borne d'entree est connectée au point commun de la ligne de transmission à retard 3, de la résistance 803 formant pont diviseur avec la ligne à retard 3 et de la capacité de découplage 804. La sortie du circuit amplificateur 90 est connectée à une entrée de multiplexage du multiplexeur 6.

Dans ces conditions, le bobinage ou enroulement de la ligne de transmission à retard 3 est alors parcouru par un courant continu lorsque la porte NON-ET 802 délivre la tension d'alimentation +vcc et la tension aux bornes du bobinage précité est alors fonction de sa résistance et donc de la température moyenne de la ligne à retard c'est-à-dire en particulier fonction de la partie immergée de celle-ci par le fluide ou liquide constitué par l'hydrocarbure.

De même, le dispositif objet de l'invention, ainsi que représenté en figure 2 comporte en outre un circuit 10 de mesure de la température au sommet du réservoir R, de façon à déterminer la température du premier fluide ou liquide. Lorsque le deuxième fluide ou liquide est un hydrocarbure, le premier fluide ou liquide étant la phase vapeur de celui-ci, le circuit 10 de mesure permet de délivrer une tension proportionnelle à la température de la phase vapeur du réservoir.

Ainsi qu'on l'a représenté en figure 2, le circuit 10 de mesure de la température du premier fluide ou liquide comporte une sonde 100 de mesure de température montée dans un circuit en pont R1, R2, R7, R8, le le point de liaison de la sonde et du circuit en pont délivrant en fonctionnement une tension proportionnelle à la température du milieu ambiant de la sonde, par l'intermédiaire d'un étage préamplificateur 103. La sortie de l'amplificateur 103 étant connectée à une entrée du multiplexage du multiplexeur 6. Sur la figure 2 de la même façon, ainsi que précédemment décrit, mais cette fois en liaison avec le circuit 10 de mesure, les résistances notées R, R5, R8, R4, R3, R6 sont constituées par des résistances de polarisation dont les valeurs sont choisies pour convenir avec les composants effectivement choisis pour réaliser le préamplificateur 103 et le pont. Un amplificateur 102 délivre un courant constant dans le pont de mesure.

Enfin, ainsi qu'on l'a représenté également en figure 2, les moyens multiplexeurs 6 sont connectés à un microprocesseur noté 62 par l'intermédiaire d'un étage amplificateur 60 et d'un circuit d'interface 61, permettant d'assurer l'échantillonnage des valeurs de mesures délivrées par le multiplexeur 6 séquentiellement. Le multiplexeur 6 sur commande du troisième signal d'horloge f3 délivre en effet cycliquement en sortie, les valeurs de tension représentatives des paramètres de mesure pendant une durée 1/f3 pour chaque valeur. Le circuit d'interface 61 ne sera pas décrit car il correspond à un circuit d'interface de type classique, l'échantillonnage des valeurs de mesure étant bien entendu cadencé à une fréquence d'horloge compatible avec la fréquence f3. Bien entendu, le circuit d'interface 61 est relié au microprocesseur 62 par une liaison par BUS. D'autres modes de réalisation peuvent être prévus sans sortir du cadre de la présente invention.

On a ainsi décrit un dispositif de mesure des paramètres de stockage tels que le niveau et la température de liquide ou fluide de densité différente et donc sensiblement non miscible dans un réservoir.

Le dispositif précédemment décrit apparaît particulièrement performant dans la mesure où il permet de mesurer directement des paramètres aussi variés tels que le niveau, c'est-à-dire le volume de liquide ou de fluide et la température de celui-ci. Bien entendu, le microprocesseur 61 comporte un programme permettant à partir des mesures des deux températures précitées, de calculer la température moyenne du liquide contenu dans le réservoir.

## Revendications

1. Dispositif de mesure des paramètres de stockage tels que le niveau et la température de liquides de liquides ou fluides de densité différente dans un réservoir (R), comprenant un générateur (1) d'impulsions à fréquence ajustable délivrant un premier signal d'horloge de fréquence f1 et un circuit (2) demise en forme d'impulsions délivrant des impulsions calibrées de mesure à une ligne à retard (3) constituée par un enroulement en hélice disposé sensiblement verticalement dans le réservoir (R), l'extrémité de ladite ligne à retard (3) disposée au voisinage du fond du réservoir étant connectée à une résistance (30), caractérisé en ce que ledit dispositif comporte :

- des moyens comparateurs (4) dont une borne d'entrée de comparaison est connectée à la borne d'entrée de ladite ligne à retard et dont la borne de sortie permet de délivrer un signal sur présence à ladite borne de comparaison d'une impulsion,

- une pluralité de moyens logiques (L1, L2, ...Li, Ln) connectés en parallèle à la sortie desdites moyens de comparaison, chaque moyen logique (Li) étant d'une part rendu passant par l'apparition d'une impulsion calibrée (Im) à la borne d'entrée de ladite ligne à retard (3), ledit moyen logique (Li) étant, d'autre part, bloqué par l'impulsion en réflexion correspondante (Ii) provoquée au niveau ded ladite ligne par la ième transition entre un milieu d'ordre et un milieu d'ordre i + 1,

- des moyens intégrateurs (J1, J2, Ji, Jn), un moyen intégrateur d'ordre étant connecté en sortie dudit moyen logique correspondant et permettant d'engendrer une tension proportionnelle au temps d'ouverture du moyen logique (Li) correspondant,

- des moyens (5) d'inhibition conventionnelle à une entrée recevant lesdites impulsions délivrées par les moyens comparateurs et à n sorties, une sortie d'ordre i et d'ordre inférieur des moyens d'inhibition conditionnelle délivrant un signal de commande de blocage audit moyen logique correspondant (Li) sur apparition en sortie des moyens de comparaison 4 de l'impulsion réfléchie Ii correspondante,

- des moyens multiplexeurs (6) dont les bornes d'entrée de multiplexage sont connectées en sortie desdits moyens intégrateurs (Ji) respectivement.

2. Dispositif selon la revendication 1, caractérisé en ce que, dans le cas de deux transitions correspondant à trois milieux (I, II, III) de densité différente dans le réservoir, ladite pluralité de moyens logiques comprend :

- un premier circuit logique constituant premier moyen logique (1) et comprenant deux portes NON-ET (101,102) à deux entrées, la sortie de la première porte NON-ET (101) étant connectée à une première entrée de la deuxième porte NON-ET (102) et la sortie, la deuxième porte NON-ET (102), constituant sortie du moyen logique (L1) correspondant, étant connectée à la deuxième entrée de la première porte NON-ET (101),

- un deuxième circuit logique constituant deuxième moyen logique (12) et comportant deux portes NON-ET (201,202) à deux entrées, la sortie de la première porte NON-ET (201) étant connectée à une première entrée de la deuxième porte NON-ET (202) et la sortie de la deuxième porte NON-ET (202) constituant sortie du moyen logique (L2) correspondant, étant connectée à la deuxième entrée de la première porte NON-ET (201), la première entrée de la première porte NON-ET (101,201) du premier (L1) et du deuxième (L2) circuit logique étant connectée à la sortie des moyens comparateurs (4) par l'intermédiaire d'une porte NON-ET intermédiaire (401,402) dont la première entrée est connectée en cascade à une porte NON-ET commune (403) dont la première entrée est reliée à la tension d'alimentation Vcc et dont la deuxième entrée est connectée en sortie des moyens de comparaison (4),
- un circuit (5) d'inhibition conditionnelle à deux sorties, une sortie du circuit d'inhibition conditionnelle étant connectée à une deuxième entrée de la porte NON-ET intermédiaire correspondante.

3. Dispositif selon la revendication 2, caractérisé en ce que ledit circuit d'inhibition conditionnelle (5) comprend :
- une première porte NON-ET (504) à deux entrées dont une première entrée est connectée en sortie de ladite porte NON-ET commune (403) et dont la deuxième entrée est connectée à la tension d'alimentation (+Vcc),
- un circuit de liaison à capacité (505) résistance (506) comportant en cascade une porte NON-ET (507) dont les entrées connectées en parallèle sont reliées à la tension de référence par une diode (508) connectée en inverse,
- un circuit logique comprenant deux portes NON-ET (509, 510) à deux entrées, la sortie de la première porte NON-ET (509) étant connectée à une première entrée de la deuxième porte NON-ET (510) et la sortie de la deuxième porte NON-ET (510) étant connectée à la deuxième entrée de la première porte NON-ET (509), la sortie desdites portes NON-ET (509,510) constituant sortie desdits moyens logiques d'inhibition conditionnelle, la première entrée de la première porte logique NON-ET (509) étant connectée en sortie de la porte NON-ET (507) du circuit de liaison et la deuxième entrée de la deuxième porte NON-ET (510) étant reliée en sortie du circuit (2) de mise en forme des impulsions de mesure.

4. Dispositif selon l'une des revendications 2 ou 3, caractérisé en ce qu'il comporte en outre un circuit d'asservissement (404,405,406) du seuil de déclenchement des moyens comparateurs (4) afin d'obtenir en sortie de ces moyens comparateurs des impulsions de largeur constante.

5. Dispositif selon l'une des revendications 1 à 4, caractérisé en ce qu'il comprend en outre :
- un circuit (7) diviseur d'impulsions recevant un deuxième signal d'horloge de fréquence f2 délivrée par le générateur d'impulsions (1), ledit circuit diviseur (7) délivrant un troisième signal d'horloge de fréquence f3, constituant signal de cadencement dudit multiplexeur, par l'intermédiaire d'un compteur (8),
- une première porte NON-ET (801) interconnectée entre ledit compteur (8) et le multiplexeur (6) et alimentée sous la tension d'alimentation de référence +Vcc et dont la sortie délivre périodiquement à la fréquence f3, ladite tension d'alimentation +Vcc,
- une deuxième porte NON-ET (802) dont une première entrée est connectée à la sortie de la première porte NON-ET (801) et dont une deuxième entrée est connectée en sortie du circuit (2) de mise en forme délivrant les impulsions calibrées de mesure (Im), ladite deuxième porte NON-ET (802) permettant de substituer périodiquement aux impulsions de mesure (Im), ladite tension d'alimentation +Vcc et délivrant soit les impulsions de mesure (Im), soit la tension d'alimentation +Vcc à ladite ligne à retard (3) par l'intermédiaire d'une résistance (803) formant pont diviseur avec la ligne et d'une capacité de découplage (804),
- un circuit (9) de mesure de la température moyenne dans le réservoir comportant un amplificateur (90) dont la borne d'entrée est connectée au point commun de la ligne (3) de la résistance (803) formant pont diviseur avec la ligne (3) et de la capacité de découplage (804), la sortie dudit circuit amplificateur (90) étant connectée à une entrée de multiplexage du multiplexeur (6).

6. Dispositif selon l'une des revendications précédentes, caractérisé en ce qu'il comporte en outre un circuit (10) de mesure de la température au sommet du réservoir de façon à déterminer la température du premier fluide ou liquide.

7. Dispositif selon la revendication 6, caractérisé en ce que ledit deuxième fluide ou liquide étant un hydrocarbure et le premier fluide ou liquide étant une phase vapeur de cet hydrocarbure, ledit circuit (10) de mesure permet de délivrer une tension proportionnelle à la température de la phase vapeur du réservoir.

8. Dispositif selon l'une des revendications 6 ou 7, caractérisé en ce que ledit circuit (10) de mesure de la température du premier fluide ou liquide comporte :
- une sonde (100) de mesure de température montée dans un circuit en pont, le point de liaison de la sonde et du circuit en pont délivrant en fonctionnement une tension proportionnelle à la température du milieu ambiant de la sonde par l'intermédiaire d'un étage préamplificateur,
- un étage amplificateur (103) recevant le signal délivré par le pont et dont la sortie est connectée à une entrée de multiplexage (6).

9. Dispositif selon l'une des revendications précédentes, caractérisé en ce que lesdits moyens multiplicateurs (6) sont connectés à un microprocesseur, ledit multiplexeur, sur commande du troisième signal d'horloge f3, délivrant cycliquement en sortie des valeurs de tension représentatives des paramètres de mesure pendant une durée 1/f3 pour chaque valeur.

FIG_1

**FIG_2**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | FR-A-2 215 610 (WHESSOE)<br>* Revendications; figures *<br>--- | 1-9 | G 01 F 23/28<br>G 01 D 5/247 |
| Y | EP-A-0 138 541 (L. KIENZLE)<br>* Résumé; figures; page 9, lignes 10-30 *<br>----- | 1-9 | |

**DOMAINES TECHNIQUES RECHERCHES (Int. Cl.4)**

G 01 F
G 01 D

**Le présent rapport a été établi pour toutes les revendications**

| Lieu de la recherche | Date d'achèvement de la recherche | Examinateur |
|---|---|---|
| LA HAYE | 31-03-1989 | LLOYD P.A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant